# EUROPEAN PATENT APPLICATION

(11) **EP 4 701 038 A1**
(43) Date of publication of application: **25.02.2026**
(21) Application number: 24895160.0
(22) Date of filing: 27.11.2024
(51) Int. Cl.: H02J 7/10, H02J 7/00

(54) **ENERGY STORAGE AND CHARGING INTEGRATED APPARATUS, AND CHARGING SYSTEM**

(30) Priority: 12.07.2024 CN 202421647403 U
(71) Applicant: Contemporary Amperex Technology Co., Ltd., Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Ran, Handong
(86) International application number: PCT/CN2024/134988
(87) International publication number: WO 2026/011655

(57) **Abstract**

The present disclosure discloses an integrated storage and charging device. The integrated storage and charging device includes a first voltage conversion module, a second voltage conversion module, an energy storage module, a first switch module, and a second switch module. An output end of the first voltage conversion module is connected to a first end of the first switch module. A second end of the first switch module is connected to the energy storage module. An output end of the second voltage conversion module is connected to a first end of the second switch module. A second end of the second switch module is connected to the energy storage module. The integrated storage and charging device is configured to: control the on-off state of the first switch module and the on-off state of the second switch module and perform charging and discharging tests between the first voltage conversion module, the second voltage conversion module, and the energy storage module.

## Description

### CROSS-REFERENCE TO RELATED APPLICATIONS

The present disclosure is proposed based on Chinese Patent Application No. 202421647403.0 filed on July 12, 2024 and entitled "INTEGRATED STORAGE AND CHARGING DEVICE AND CHARGING SYSTEM", and claims the priority of the China patent application, which is incorporated herein by reference in its entirety.

### TECHNICAL FIELD

The present disclosure relates to the technical field of batteries, and in particular to, an integrated storage and charging device and a charging system.

### BACKGROUND

With the increase of the total number of new energy vehicles, there are increasingly high requirements for charging facilities. An integrated storage and charging machine integrating an energy storage function with a charging function can adjust an electrical load to increase long-term benefits. At present, the integrated storage and charging machine has been widely used in charging stations for new energy vehicles.

To ensure stable and reliable operation of the integrated storage and charging machine, it is necessary to test overall charging and discharging functions of the integrated storage and charging machine and the reliability and stability of modules at a mounting site of the integrated storage and charging machine, to avoid function abnormalities of the modules. A current solution is to complete the test through external charging and discharging equipment, but this test method not only increases the test costs, but also is not conducive to on-site debugging of the integrated storage and charging machine.

### SUMMARY

The technical solutions of the present disclosure are implemented as follows:
In a first aspect, an embodiment of the present disclosure provides an integrated storage and charging device. The integrated storage and charging device includes a first voltage conversion module, a second voltage conversion module, an energy storage module, a first switch module, and a second switch module, wherein
an input end of the first voltage conversion module is connected to an alternating current grid; an output end of the first voltage conversion module is connected to a first end of the first switch module; a second end of the first switch module is connected to the energy storage module;
the output end of the first voltage conversion module is further connected to an input end of the second voltage conversion module; an output end of the second voltage conversion module is connected to a first end of the second switch module; a second end of the second switch module is connected to the energy storage module; and
the integrated storage and charging device is configured to: control the on-off state of the first switch module and the on-off state of the second switch module and perform charging and discharging tests between the first voltage conversion module, the second voltage conversion module, and the energy storage module.

Through the above technical means, by controlling the on-off state of the first switch module and the on-off state of the second switch module, different test loops are formed between the first voltage conversion module, the second voltage conversion module, and the energy storage module, thereby achieving charging and discharging tests on the first voltage conversion module, the second voltage conversion module, and the energy storage module. In this way, the integrated storage and charging device can perform the charging and discharging tests between the modules arranged inside the integrated storage and charging device, without adding external charging and discharging equipment for testing, thus reducing the test costs. Moreover, the integrated storage and charging device is not restricted by test equipment and a test site, which facilitates on-site debugging of the integrated storage and charging device, thereby improving the test efficiency.

In some embodiments, the integrated storage and charging device further includes a control module. The control module is configured to: send a first driving signal to the first switch module and send a second driving signal to the second switch module; the first switch module is configured to: receive the first driving signal and control, according to the first driving signal, the on-off state of the first switch module; and the second switch module is configured to: receive the second driving signal and control, according to the second driving signal, the on-off state of the second switch module.

Through the above technical means, the first driving signal is sent to the first switch unit to control the first switch unit to be turned on or turned off; and the second driving signal is sent to the second switch unit to control the second switch unit to be turned on or turned off. Thus, different circuit loops can be formed, and tests can be completed without external equipment, thereby improving the test efficiency and the convenience.

In some embodiments, the integrated storage and charging device is configured to: control, when the first driving signal is in a first level state and the second driving signal is in a second level state, the first switch module to be turned on and the second switch module to be turned off, and perform, based on the alternating current grid, charging and discharging tests between the first voltage conversion module and the energy storage module to determine a first test result.

Through the above technical means, in a case that the first switch module is turned on and the second switch module is turned off, the energy storage module and the first voltage conversion module are controlled to be connected to perform the charging and discharging tests on the energy storage module and the first voltage conversion module. In this way, mutual test between the energy storage module and the first voltage conversion module on the circuit loop can be achieved by rapid charging and discharging of the energy storage module, without external charging and discharging equipment.

In some embodiments, the integrated storage and charging device is configured to: control, when the first driving signal is in a second level state and the second driving signal is in a first level state, the first switch module to be turned off and the second switch module to be turned on, and perform, based on the alternating current grid, charging and discharging tests between the first voltage conversion module, the second voltage conversion module, and the energy storage module to determine a second test result.

Through the above technical means, in a case that the first switch module is turned off and the second switch module is turned on, the energy storage module and the first voltage conversion module are controlled to be connected to perform the charging and discharging tests on the energy storage module, the first voltage conversion module, and the second voltage conversion module. In this way, mutual test between the energy storage module, the first voltage conversion module, and the second voltage conversion module on the circuit loop can be achieved by rapid charging and discharging of the energy storage module, without external charging and discharging equipment.

In some embodiments, the control module is further configured to: when the first test result is normal, send the first driving signal in the first level state to the first switch module and send the second driving signal in the second level state to the second switch module, to control the first switch module to be turned on and the second switch module to be turned off; the first voltage conversion module is further configured to: receive a first grid voltage output by the alternating current grid, perform voltage conversion on the first grid voltage to obtain a first charging voltage, and provide the first charging voltage to the energy storage module for charging.

Through the above technical means, when the control module controls, according to the first test result, the first switch module to be turned on and the second switch module to be turned off, the energy storage module is charged by the alternating current grid via the first voltage conversion module. In this way, the energy storage module can be charged only when the first voltage conversion module and the energy storage module are tested normally, thereby improving the safety and stability of the energy storage module in the charging process.

In some embodiments, the control module is further configured to: when the second test result is normal, send the first driving signal in the first level state to the first switch module and send the second driving signal in the second level state to the second switch module, to control the first switch module to be turned on and the second switch module to be turned off; the energy storage module is further configured to provide a first battery voltage to the second voltage conversion module through the first switch module; and the second voltage conversion module is configured to: perform voltage conversion on the first battery voltage to obtain a second charging voltage, and provide the second charging voltage to equipment to be charged for charging.

Through the above technical means, when the second test result is normal, the first switch module is controlled to be turned on and the second switch module is controlled to be turned off, so that the energy storage module charges the equipment to be charged through the second voltage conversion module. In this way, the integrated storage and charging device can still supply power to the equipment to be charged when the alternating current grid is in a peak demand for electricity or has a power outage, thereby enriching application scenarios of the integrated storage and charging device.

In some embodiments, the control module is further configured to: when the first test result and the second test result are both normal, send the first driving signal in the second level state to the first switch module and send the second driving signal in the second level state to the second switch module, to control both the first switch module and the second switch module to be turned off; the first voltage conversion module is further configured to: receive a second grid voltage output by the alternating current grid, and perform voltage conversion on the second grid voltage to obtain a first converted voltage; and the second voltage conversion module is further configured to: perform voltage conversion on the first converted voltage to obtain a third charging voltage, and provide the third charging voltage to equipment to be charged for charging.

Through the above technical means, when the first test result and the second test result are both normal, the first switch module and the second switch module are both controlled to be turned off, and the alternating current grid charges the equipment to be charged via the first voltage conversion module and the second voltage conversion module. The equipment to be charged can be charged only when the first voltage conversion module, the energy storage module, and the second voltage conversion module are tested normally, thereby improving the safety and stability of the equipment to be charged in the charging process.

In some embodiments, the control module is further configured to: when the first test result and the second test result are both normal, send the first driving signal in the first level state to the first switch module and send the second driving signal in the second level state to the second switch module, to control the first switch module to be turned on and the second switch module to be turned off; the energy storage module is further configured to provide a second battery voltage to the second voltage conversion module through the first switch module; the first voltage conversion module is further configured to: receive a third grid voltage output by the alternating current grid, perform voltage conversion on the third grid voltage to obtain a second converted voltage, provide the second converted voltage to the second voltage conversion module; and the second voltage conversion module is configured to: receive the second battery voltage and the second converted voltage, perform voltage conversion on the second battery voltage and the second converted voltage to obtain a fourth charging voltage, and provide the fourth charging voltage to equipment to be charged for charging.

Through the above technical means, when the first test result and the second test result are both normal, the first switch module is controlled to be turned on and the second switch module is controlled to be turned off, and both the alternating current grid and the energy storage module charge the equipment to be charged. In this way, the charging speed and charging efficiency of the integrated storage and charging device are improved.

In some embodiments, the integrated storage and charging device further includes a communication module; the communication module is connected to the control module; the communication module is configured to: receive a first control signal and send the first control signal to the control module; and the control module is further configured to: generate, according to the first control signal, the first driving signal that is sent to the first switch module and the second driving signal that is sent to the second switch module.

Through the above technical means, the control module generates the first driving signal and the second driving signal based on the first control signal sent by the communication module, and controls the on-off state of the first switch module and the on-off state of the second switch module respectively. In this way, the first switch module and the second switch module can be switched to different on/off states in different modes according to control, thereby improving the convenience and safety of control of the integrated storage and charging device.

In some embodiments, the control module is further configured to: send a second control signal to the first voltage conversion module and send a third control signal to the second voltage conversion module; the first voltage conversion module is configured to: receive the second control signal and control the voltage conversion of the first voltage conversion module according to the second control signal; and the second voltage conversion module is configured to: receive the third control signal and control the voltage conversion of the second voltage conversion module according to the third control signal.

Through the above technical means, the control module can send the second control signal to the first voltage conversion module to control the voltage conversion of the first voltage conversion module, and send the third control signal to the second voltage conversion module to control the voltage conversion of the second voltage conversion module. In this way, the voltage conversion of the first voltage conversion module and the voltage conversion of the second voltage conversion module are controlled, thereby improving the accuracy and stability of an output voltage of the integrated storage and charging device.

In a second aspect, an embodiment of the present disclosure provides a charging system, including a charging gun, equipment to be charged, and any integrated storage and charging device in the first aspect. An input end of the charging gun is connected to an output end of the integrated storage and charging device, and an output end of the charging gun is connected to the equipment to be charged.

The integrated storage and charging device is configured to: perform voltage conversion on an output voltage of the energy storage module and/or an output voltage of the alternating current grid, and provide a charging voltage obtained after the voltage conversion to the equipment to be charged through the charging gun for charging.

Through the above technical means, the integrated storage and charging device can charge the equipment to be charged through the charging gun. The integrated storage and charging device can achieve mutual test between the first voltage conversion module, the second voltage conversion module, and the energy storage module, without external charging and discharging equipment, thus completing the test of the integrated machine. The charging gun improves the safety and stability of the integrated storage and charging device in the charging process.

It should be understood that the foregoing general descriptions and the following detailed descriptions are merely for illustration and explanation purposes and are not intended to limit the technical solutions of the present disclosure.

### BRIEF DESCRIPTION OF DRAWINGS

FIG. 1 is a schematic structural diagram I of compositions of a charging system according to an embodiment of the present disclosure;
FIG. 2 is a schematic structural diagram II of compositions of a charging system according to an embodiment of the present disclosure;
FIG. 3 is a schematic structural diagram III of compositions of a charging system according to an embodiment of the present disclosure; and
FIG. 4 is a schematic structural diagram IV of compositions of a charging system according to an embodiment of the present disclosure.

### DETAILED DESCRIPTION

In order to understand the characteristics and technical content of the embodiments of the present disclosure in more detail, the implementation of the embodiments of the present disclosure will be described in detail below with reference to the accompanying drawings. The attached drawings are for reference only and are not intended to limit the embodiments of the present disclosure.

Unless otherwise defined, all technical and scientific terms used herein have the same meaning as commonly understood by those skilled in the art belonging to the technical field of the present application. The terms used herein are for the purpose of describing embodiments of the present disclosure only and are not intended to limit the present disclosure.

In that follow description, "some embodiments" are involved, which describe a subset of all possible embodiments, but it is understood that "some embodiments" may be the same subset or different subsets of all possible embodiments, and may be combined with each other without conflict.

It should be further noted that the term "first\ second\third" in the embodiments of the present disclosure is merely used to distinguish similar players and does not represent a specific order of the players. "First\second\third" can be interchanged in a specific order or precedence where permitted, to enable the embodiments of the present disclosure described herein to be implemented in a sequence other than that illustrated or described here.

In addition, reference to "an embodiment" herein means that a particular feature, structure or characteristic described in conjunction with an embodiment may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

The related technology of the present disclosure will be introduced below.

New energy batteries are increasingly applied in life and industry. For example, new energy vehicles with batteries have been widely used. In addition, batteries are further increasingly applied in the field of energy storage.

At present, the new energy batteries are increasingly applied in life and industry. The new energy batteries are not only applied in energy storage power supply systems such as water power, fire power, wind power, and solar power stations, but also widely applied in electric transportation tools, such as electric bicycles, electric motorcycles and electric vehicles, as well as many fields, such as aerospace. With the continuous expansion of the application field of the power batteries, the market demand is also constantly increasing.

In the embodiments of the present disclosure, a battery may be a battery cell. The battery cell means a basic unit that can achieve mutual conversion between chemical energy and electrical energy, and may be configured to make a battery module or a battery pack to supply power to an electrical apparatus. The battery cell may be a secondary battery, and the secondary battery refers to a battery cell that can be used continually by activating an active material in a charging manner after the battery cell is discharged. The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present disclosure are not limited to this.

In the embodiments of the present disclosure, the battery may also be a single physical module including one or more battery cells to provide a higher voltage and capacity. When there are a plurality of battery cells, the plurality of battery cells are connected by series connection, or parallel connection, or parallel-series connection through a bus component.

When a new energy vehicle uses a super fast charger, a high current of 150 to 600 A may be generated. Excessively intensive charging may cause an excessive instantaneous load on a charging station. As a result, a grid is unstable. In order to adjust an electrical load and increase long-term benefits, the integrated storage and charging machines are used more and more frequently in charging stations, parking lots, and other places.

The integrated storage and charging machine generally means a photovoltaic integrated storage and charging machine. The "photovoltaic" means photovoltaic power generation. Usually, a photovoltaic cell panel is mounted on a roof of charging equipment. "Storage" means a smart battery module for storing electricity, and "charging" means charging a new energy vehicle. Therefore, the integrated storage and charging machine can supply power to a grid or a vehicle through the battery module when the grid is in a peak demand for electricity, and the grid may charge the battery module and the vehicle when the grid is in a low demand for electricity, thus playing a role of peak shaving.

In order to ensure the stability, reliability and safety of the integrated storage and charging machine, appropriate equipment needs to be used to carry out a variety of tests, including a safety test, a module performance test, and the like. The module performance test includes a charging and discharging efficiency test, a cycle life test, a charging rate test, and the like. In the process of performing the above tests, some sets of special equipment are required, such as adding external charging and discharging equipment. However, this test method of adding the external equipment not only increases the test costs, but also is not conducive to on-site debugging.

Based on this, the embodiments of the present disclosure provide an integrated storage and charging device and a charging system. By controlling the on-off state of a first switch module and the on-off state of a second switch module, different circuit loops are formed between a first voltage conversion module, a second voltage conversion module, and an energy storage module, thereby achieving charging and discharging tests on the first voltage conversion module, the second voltage conversion module, and the energy storage module. In this way, the integrated storage and charging machine can perform the charging and discharging tests between the modules arranged inside the integrated storage and charging machine, without adding additional external charging and discharging equipment for testing, thus reducing the test costs. Moreover, the integrated storage and charging machine is not restricted by test equipment and a test site, which facilitates on-site debugging of the integrated storage and charging machine, thereby improving the test efficiency.

The present disclosure will be explained in detail below in conjunction with the accompanying drawings and specific embodiments.

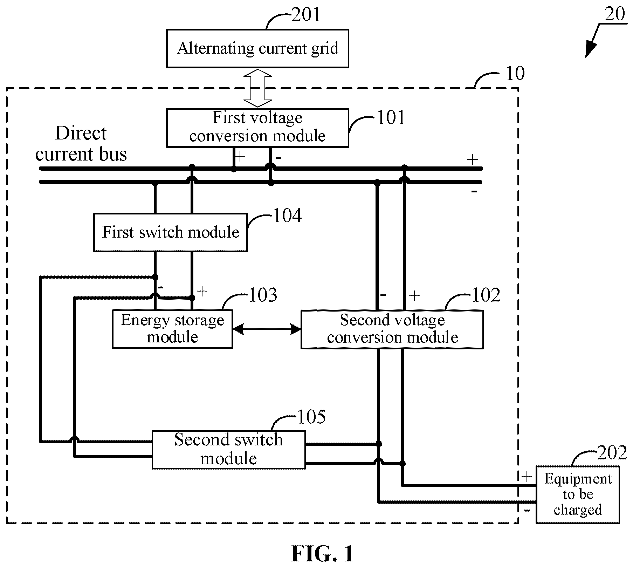

In an embodiment of the present disclosure, FIG. 1 is a schematic structural diagram I of compositions of a charging system according to an embodiment of the present disclosure. As shown in FIG. 1, the charging system includes an integrated storage and charging device 10. The integrated storage and charging device 10 includes a first voltage conversion module 101, a second voltage conversion module 102, an energy storage module 103, a first switch module 104, and a second switch module 105.

An input end of the first voltage conversion module 101 is connected to an alternating current grid 201; an output end of the first voltage conversion module 101 is connected to a first end of the first switch module 104; and a second end of the first switch module 104 is connected to the energy storage module 103.

The output end of the first voltage conversion module 101 is further connected to an input end of the second voltage conversion module 102; an output end of the second voltage conversion module 102 is connected to a first end of the second switch module 105; and a second end of the second switch module 105 is connected to the energy storage module 103.

The integrated storage and charging device 10 is configured to: control the on-off state of the first switch module 104 and the on-off state of the second switch module 105 and perform charging and discharging tests between the first voltage conversion module 101, the second voltage conversion module 102, and the energy storage module 103.

In the embodiments of the present disclosure, the integrated storage and charging device 10 can be a single integrated storage and charging machine or a photovoltaic integrated storage and charging machine with a photovoltaic cell. It can store energy such as mains power, photovoltaic power, or diesel as electrical energy in the energy storage module 103, or can be used as a charging pile or a power supply to supply power to a new energy vehicle or other electrical appliances.

The first voltage conversion module 101 can convert an alternating current voltage received from the alternating current grid 201 into a direct current voltage and output the direct current voltage, or convert the alternating current voltage into a direct current voltage and provide the direct current voltage to the alternating current grid. For example, the first voltage conversion module 101 may be a bidirectional alternating current/direct current (AC/DC) converter, and may also convert parameters such as current. In addition, the second voltage conversion module 102 can step up or step down the input direct current voltage, convert the direct current voltage into a direct current voltage, and output the direct current voltage. For example, the second voltage conversion module 102 may be a bidirectional direct current/direct current (DC/DC) converter, and may also convert parameters such as current. In the embodiments of the present disclosure, the first voltage conversion module 101 and the second voltage conversion module 102 may each include a capacitor, an inductor, and the like, and no limitations will be imposed on their specific structures here.

In the embodiments of the present disclosure, the energy storage module 103 may be a storage battery capable of storing electrical energy in the storage-charging integrated machine, such as a lithium iron phosphate battery, a lithium-ion battery, and the like. The energy storage module 103 may store electrical energy output or converted by the alternating current grid 201 or a renewable energy source, such as photovoltaic power generation equipment. A battery capacity and type of the energy storage module 103 are not limited in any way here.

It should be noted that the alternating current grid 201 may be a three-phase alternating current grid, an output voltage value of which is generally 150 kV. In the embodiments of the present disclosure, the alternating current grid 201 is connected to the first voltage conversion module 101 and can output an alternating current voltage to the first voltage converter.

In the embodiments of the present disclosure, the first switch module 104 and the second switch module 105 may be electronic elements that are controlled to be turned on or turned off based on driving signals, thereby controlling a circuit in the integrated storage and charging machine to be opened and a current to be interrupted or to flow to other circuits. For example, the switch modules may be knife switches, or may be semiconductor devices such as switch transistors, triodes, transistors, an insulated-gate bipolar transistor (IGBT), a metal-oxide-semiconductor field-effect transistor (MOSFET or MOS transistor), and will not be limited here in any way.

In the embodiments of the present disclosure, the integrated storage and charging machine can form different circuit loops in the integrated storage and charging machine by controlling the first switch module 104 and the second switch module 105 to be turned on or turned off, thereby performing charging and discharging tests between the first voltage conversion module 101, the second voltage conversion module 102, and the energy storage module 103. Exemplarily, in a case that the first switch module 104 is turned on and the second switch module 105 is turned off, the energy storage module 103 is connected to the first voltage conversion module 101, and the energy storage module 103 is disconnected from the second voltage conversion module 102. A loop can be formed among the alternating current grid 201, the first voltage conversion module 101, the first switch module 104, and the energy storage module 103, to perform a charging and discharging test. In a case that the first switch module 104 is turned off and the second switch module 105 is turned on, the energy storage module 103 is disconnected from the first voltage conversion module 101, and the energy storage module 103 is connected to the first voltage conversion module 101. A loop can be formed among the alternating current grid 201, the first voltage conversion module 101, the second voltage conversion module 102, and the energy storage module 103, to perform a charging and discharging test.

It should be noted that the first switch module 104 and the second switch module 105 have different on/off states, so as to form different circuit loops, and thus performing mutual charging and discharging tests on different modules among the first voltage conversion module 101, the second voltage conversion module 102, and the energy storage module 103.

It should be further noted that the charging and discharging test means monitoring input parameters and output parameters of the modules in the integrated storage and charging device 10 during charging or discharging of the energy storage module 103, and testing whether there are any abnormalities in the energy storage module 103, the first voltage conversion module 101, and the second voltage conversion module 102. Both the input parameters and the output parameters may include current, voltage, power, and the like.

The embodiments of the present disclosure provide an integrated storage and charging device. By controlling the on-off state of a first switch module and the on-off state of a second switch module, different circuit loops are formed between a first voltage conversion module, a second voltage conversion module, and an energy storage module, thereby achieving charging and discharging tests on the first voltage conversion module, the second voltage conversion module, and the energy storage module. In this way, the integrated storage and charging machine can perform the charging and discharging tests between the modules arranged inside the integrated storage and charging machine, without adding additional external charging and discharging equipment for testing, thus reducing the test costs. Moreover, the integrated storage and charging machine is not restricted by test equipment and a test site, which facilitates on-site debugging of the integrated storage and charging machine, thereby improving the test efficiency.

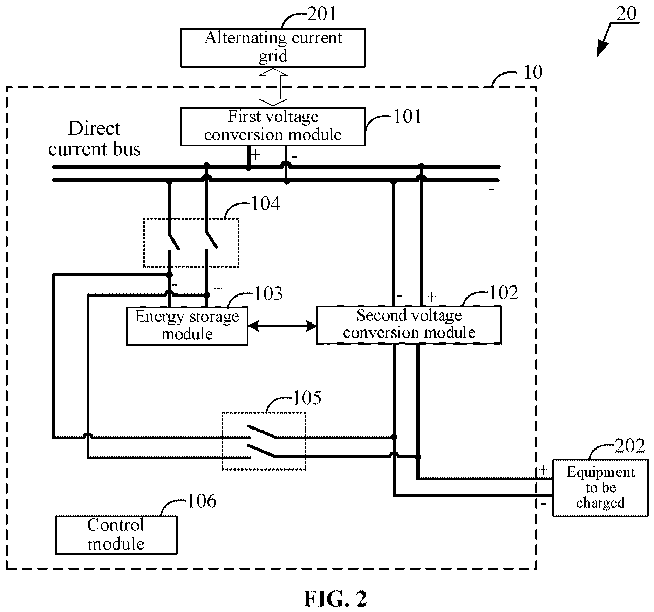

In another embodiment of the present disclosure, FIG. 2 is a schematic structural diagram II of compositions of a charging system according to an embodiment of the present disclosure. As shown in FIG. 2, the integrated storage and charging device 10 further includes a control module 106. Where:
The control module 106 is configured to: send a first driving signal to the first switch module 104, and send a second driving signal to the second switch module 105.

The first switch module 104 is configured to: receive the first driving signal and control, according to the first driving signal, the on-off state of the first switch module 104.

The second switch module 105 is configured to: receive the second driving signal and control, according to the second driving signal, the on-off state of the second switch module 105.

In the embodiments of the present disclosure, the control module 106 may also be referred to as a storage-charging integrated device control unit, which may include a microcontroller unit (MCU), a sensor, a switching circuit, and other devices for monitoring, controlling, and managing the storage-charging integrated device 10.

In the embodiments of the present disclosure, the first driving signal is a signal sent by the control module 106 to the first switch module 104 for controlling a first switch unit to be turned on or turned off; and the second driving signal is a signal sent by the control module 106 to the second switch module 105 for controlling a second switch unit to be turned on or turned off.

It should be noted that the first driving signal may have different level states to correspondingly control the first switch unit to be turned on or turned off. Correspondingly, the second driving signal may also have different level states to correspondingly control the second switch unit to be turned on or turned off. A level state of the first driving signal and a level state of the second driving signal can be determined according to a module that currently needs to be tested.

As shown in FIG. 2, the first switch unit may include two switches which are respectively configured to control connection between a positive end of the energy storage module 103 and a positive end of the first voltage conversion module 101, and connection between a negative end of the energy storage module 103 and a negative end of the first voltage conversion module 101. Correspondingly, the second switch unit may also include two switches which are respectively configured to control connection between the positive end of the energy storage module 103 and a positive end of the second voltage conversion module 102, and connection between the negative end of the energy storage module 103 and a negative end of the second voltage conversion module 102. It should be noted that the on or off states of the two switches in the first switch unit are the same and are controlled by the first driving signal; the on or off states of the two switches in the second switch unit are the same and are controlled by the second driving signal.

The embodiments of the present disclosure provide an integrated storage and charging device. The first driving signal is sent to the first switch unit to control the first switch unit to be turned on or turned off; and the second driving signal is sent to the second switch unit to control the second switch unit to be turned on or turned off. Thus, different circuit loops can be formed, and tests can be completed without external equipment, thereby improving the test efficiency and the convenience.

In some embodiments, continuing to refer to FIG. 2, the integrated storage and charging device 10 is configured to: control, when the first driving signal is in a first level state and the second driving signal is in a second level state, the first switch module 104 to be turned on and the second switch module to be turned off 105, and perform, based on the alternating current grid 201, charging and discharging tests between the first voltage conversion module 101 and the energy storage module 103 to determine a first test result.

As mentioned above, different level states of the first driving signal correspond to different on or off states of the first switch unit. In the embodiments of the present disclosure, when the first driving signal is in the first level state, the first switch module 104 is turned on; and when the first driving signal is in a second level state, the first switch module 104 is turned off. The first level state may be a high-level state, and the second level state may be a low-level state.

In the embodiments of the present disclosure, when the first switch module 104 is turned on and the second switch module 105 is turned off, the energy storage module 103 is connected to the first voltage conversion module 101 through the first switch module 104, and the energy storage module 103 is disconnected from the second voltage conversion module 102. In this case, based on a circuit loop formed by the energy storage module 103, the first voltage conversion module 101, and the first switch module 104, charging and discharging tests can be performed between the first voltage conversion module 101 and the energy storage module 103 to determine the first test result.

Exemplarily, the process of performing the charging test based on the above circuit loop may include: The alternating current grid 201 provides an alternating current test voltage for the first voltage conversion module 101, and then the first voltage conversion module 101 performs AC/DC conversion on the test voltage to obtain a direct current test voltage and outputs the direct current test voltage to the energy storage module 103 through a direct current bus and the turned-on first switch module 104, so as to perform the charging test on the energy storage module 103. In this process, the control module 106 can determine, by monitoring the direct current test voltage output by the first voltage module 101, whether the first voltage conversion module 101 is abnormal. The control module 106 can also determine, by monitoring a voltage change and a current change of the energy storage module 103, whether the energy storage module 103 is abnormal.

Exemplarily, the process of performing the discharging test based on the above circuit loop may include: The energy storage module 103 provides the direct current test voltage for the first voltage conversion module 101 through the turned-on first switch module 104, and the first voltage conversion module 101 performs AC/DC conversion on the received direct current test voltage to obtain an alternating current test voltage, and sends the alternating current test voltage to the alternating current grid 201. In this process, the control module 106 can determine, by monitoring the alternating current test voltage output by the first voltage module 101, whether the first voltage conversion module 101 is abnormal. The control module 106 can also determine, by monitoring the direct current test voltage output by the energy storage module 103, and a voltage change and a current change of the energy storage module 103, whether the energy storage module 103 is abnormal.

Based on the above charging and discharging test processes, tests on the first voltage conversion module 101 and the energy storage module 103 can be achieved. In the above charging and discharging test processes, a flowing path of electrical energy is as follows: alternating current grid 201↔first voltage conversion module 101↔direct current bus↔first switch module 104↔energy storage module 103. In this way, the charging and discharging tests on the first voltage conversion module 101 and the energy storage module 103 are achieved by quick charging and discharging between the energy storage module 103 and the first voltage conversion module 101.

It should be noted that the first test result may indicate that the test succeeds, namely, the module is normal, or the test fails, namely, the module is abnormal. The control module 106 determines the monitoring of the first voltage conversion module 101 and the energy storage module 103 based on the above charging and discharging tests. Exemplarily, if the test voltage output by the first voltage conversion module 101 is abnormal, it can determine that the first test result indicates that the test fails.

The embodiments of the present disclosure provide an integrated storage and charging device. In a case that the first switch module is turned on and the second switch module is turned off, the energy storage module is controlled to be connected to the first voltage conversion module to perform the charging and discharging tests on the energy storage module and the first voltage conversion module. In this way, mutual test between the energy storage module and the first voltage conversion module on the circuit loop can be achieved by rapid charging and discharging of the energy storage module, without external charging and discharging equipment.

In some embodiments, continuing to refer to FIG. 2, the integrated storage and charging device 10 is configured to: control, when the first driving signal is in a second level state and the second driving signal is in a first level state, the first switch module 104 to be turned off and the second switch module 105 to be turned on, and perform, based on the alternating current grid 201, charging and discharging tests between the first voltage conversion module 101, the second voltage conversion module 102, and the energy storage module 103 to determine a second test result.

As mentioned above, different level states of the second driving signal correspond to different on or off states of the second switch unit. In the embodiments of the present disclosure, when the second driving signal is in the first level state, the second switch module 105 is turned on; and when second first driving signal is in a second level state, the first switch module 105 is turned off. The first level state may be a high-level state, and the second level state may be a low-level state.

In the embodiments of the present disclosure, when the first switch module 104 is turned off and the second switch module 105 is turned on, the energy storage module 103 is disconnected from the first voltage conversion module 101, and the energy storage module 103 is connected to the second voltage conversion module 102 through the second switch module 105. In this case, based on a circuit loop formed by the energy storage module 103, the first voltage conversion module 101, the second voltage conversion module 102, and the second switch module 105, charging and discharging tests can be performed between the first voltage conversion module 101, the second voltage conversion module 102, and the energy storage module 103 to determine the second test result.

Exemplarily, the process of performing the charging test based on the above circuit loop may include: The alternating current grid 201 provides an alternating current test voltage for the first voltage conversion module 101, and then the first voltage conversion module 101 performs AC/DC conversion on the test voltage to obtain a direct current test voltage and outputs the direct current test voltage to the second voltage conversion module 102 through a direct current bus. The second voltage conversion module 102 performs DC/DC conversion on the direct current test voltage to obtain a converted direct current test voltage, and outputs the converted direct current test voltage to the energy storage module 103 through the second switch module 105, so as to perform the charging test on the energy storage module 103. In this process, the control module 106 can determine, by monitoring the direct current test voltage output by the first voltage conversion module 101, whether the first voltage conversion module 101 is abnormal. The control module 106 can further determine, by monitoring the converted instruction test voltage output by the second voltage conversion module 102, whether the second voltage conversion module 102 is abnormal. The control module 106 can further determine, by monitoring a voltage change and a current change of the energy storage module 103, whether the energy storage module 103 is abnormal.

Exemplarily, the process of performing the discharging test based on the above circuit loop may include: The energy storage module 103 provides a direct current test voltage for the second voltage conversion module 102 through the turned-on second switch module 105. The second voltage conversion module 102 performs DC/DC conversion on the received direct current test voltage to obtain a converted direct current test voltage and sends the converted direct current test voltage to the first voltage conversion module 101 via a direct current bus. The first voltage conversion module 101 performs AC/DC conversion on the converted direct current test voltage to obtain an alternating current test voltage and sends the alternating current test voltage to the alternating current grid 201. In this process, the control module 106 can determine, by monitoring the direct current test voltage output by the energy storage module 103 and a voltage change and a current change of the energy storage module 103, whether the energy storage module 103 is abnormal. The control module 106 can further determine, by monitoring the converted direct current test voltage output by the second voltage conversion module 102, whether the second voltage conversion module 102 is abnormal. The control module 106 can further determine, by monitoring the alternating current test voltage output by the first voltage conversion module 101, whether the first voltage conversion module 101 is abnormal.

Based on the above charging and discharging test processes, tests on the first voltage conversion module 101, the second voltage conversion module 102, and the energy storage module 103 can be achieved. In the above charging and discharging test processes, a flowing path of electrical energy is as follows: alternating current grid 201 ↔first voltage conversion module 101 ↔direct current bus↔second voltage conversion module 102↔second switch module 105↔energy storage module 103. In this way, the charging and discharging tests on the first voltage conversion module 101, the second voltage conversion module 102, and the energy storage module 103 are achieved by quick charging and discharging between the energy storage module 103, the first voltage conversion module 101, and the second voltage conversion module 102.

It should be noted that the second test result may indicate that the test succeeds, namely, the module is normal, or the test fails, namely, the module is abnormal. The control module 106 is determined based on monitoring of the first voltage conversion module 101, the second voltage conversion module 102, and the energy storage module 103 during the above charging and discharging tests. Exemplarily, if the test voltage output by the second voltage conversion module 102 is abnormal, it can determine that the second test result indicates that the test fails.

The embodiments of the present disclosure provide an integrated storage and charging device. In a case that the first switch module is turned off and the second switch module is turned on, the energy storage module is controlled to be connected to the second voltage conversion module 102 to perform the charging and discharging tests on the energy storage module, the first voltage conversion module, and the second voltage conversion module 102. In this way, mutual test between the energy storage module, the first voltage conversion module, and the second voltage conversion module 102 on the circuit loop can be achieved by rapid charging and discharging of the energy storage module, without external charging and discharging equipment.

In another embodiment of the present disclosure, continuing to refer to FIG. 2, the control module 106 is further configured to: when the first test result is normal, send the first driving signal in the first level state to the first switch module 104 and send the second driving signal in the second level state to the second switch module 105, to control the first switch module 104 to be turned on and the second switch module 105 to be turned off.

The first voltage conversion module 101 is further configured to: receive a first grid voltage output by the alternating current grid 201, perform voltage conversion on the first grid voltage to obtain a first charging voltage, and provide the first charging voltage to the energy storage module 103 for charging.

In the embodiments of the present disclosure, in the charging and discharging test processes in the aforementioned embodiment, when the first switch module 104 is turned on and the second switch module 105 is turned off, if the first test result for the first voltage conversion module 101 and the energy storage module 103 is normal, it determines that the first voltage conversion module 101 and the energy storage module 103 can both operate normally. In this case, when the integrated storage and charging device 10 is actually used, the control module 106 can control the first switch module 104 to be turned on by sending the first driving signal in the first level state to the first switch module 104, and control the second switch module 105 to be turned off by sending the second driving signal in the second level state to the second switch module 105, so that the alternating current grid 201 can charge the energy storage module 103 through the first voltage conversion module 101 and the turned-on first switch module 104.

It should be noted that the charging process of the energy storage module 103 in the integrated storage and charging device 10 in the embodiments of the present disclosure and a charging process of equipment to be charged in the following embodiments can be a scenario of on-site use when the first test result is normal. A user clicks on an interface to set the integrated storage and charging device 10 to different test or usage scenarios, and then the control module 106 controls each module in the integrated storage and charging device 10 based on the presetting.

In the embodiments of the present disclosure, specifically, the alternating current grid 201 first sends the first grid voltage to the first voltage conversion module 101. After receiving the first grid voltage, the first voltage conversion module 101 performs AC/DC voltage conversion on the first grid voltage to obtain a first charging voltage. Further, the first voltage conversion module 101 sends the first grid voltage to the energy storage module 103 through the direct current bus and the turned-on first switch module 104 to charge the energy storage module 103.

It should be noted that the above first grid voltage can be 150 kV. A voltage value of a first converted voltage can be greater than a voltage value of the first grid voltage, or less than the voltage value of the first grid voltage, which is determined based on a charging demand voltage of the energy storage module 103 and is not limited here in any way.

In the embodiments of the present disclosure, in the charging process of the energy storage module 103, the control module 106 can determine, by monitoring a voltage change and a current change of the energy storage module 103, whether a charging abnormality occurs in the energy storage module 103, and when a charging abnormality occurs, sends the first driving signal in the second level state to the first switch module 104 to disconnect the first switch module 104 and stop charging the energy storage module 103.

According to the integrated storage and charging device provided in the embodiments of the present disclosure, when the control module 106 controls, according to the first test result, the first switch module to be turned on and the second switch module to be turned off, the energy storage module is charged by the alternating current grid via the first voltage conversion module. In this way, the energy storage module can be charged only when the first voltage conversion module and the energy storage module are tested normally, thereby improving the safety and stability of the energy storage module in the charging process.

In some embodiments, continuing to refer to FIG. 2, the control module 106 is further configured to: when the second test result is normal, send the first driving signal in the first level state to the first switch module 104 and send the second driving signal in the second level state to the second switch module 105, to control the first switch module 104 to be turned on and the second switch module 105 to be turned off.

The energy storage module 103 is further configured to provide a first battery voltage to the second voltage conversion module 102 through the first switch module 104.

The second voltage conversion module 102 is configured to: perform voltage conversion on the first battery voltage to obtain a second charging voltage, and provide the second charging voltage to equipment 202 to be charged for charging.

In the embodiments of the present disclosure, in the charging and discharging test processes in the aforementioned embodiment, when the first switch module 104 is turned off and the second switch module 105 is turned on, the second test result for the first voltage conversion module 101, the second voltage conversion module 102, and the energy storage module 103 is normal, it determines that the first voltage conversion module 101, the second voltage conversion module 102, and the energy storage module 103 can all operate normally. In this case, when the integrated storage and charging device 10 is actually used, the control module 106 can control the first switch module 104 to be turned on by sending the first driving signal in the first level state to the first switch module 104, and control the second switch module 105 to be turned off by sending the second driving signal in the second level state to the second switch module 105, so that the energy storage module 103 charges the equipment 202 to be charged through the direct current bus and the second voltage conversion module 102.

In the embodiments of the present disclosure, in a case that a power outage occurs in the alternating current grid 201, the alternating current grid 201 stops outputting a grid voltage to the first voltage conversion module 101, and the energy storage module 103 provides the first battery voltage to the second voltage conversion module 102 through the turned-on first switch module 104 and the direct current bus.

Further, the second voltage conversion module 102 is configured to: perform DC/DC conversion on the first battery voltage to obtain a second charging voltage and provide the second charging voltage to equipment 202 to be charged for charging.

In the embodiments of the present disclosure, the control module 106 can determine, by monitoring the first battery voltage and the second charging voltage, whether the energy storage module 103 and the second voltage conversion module 102 are abnormal, and when an abnormality occurs, control the energy storage module 103 to stop outputting the first battery voltage and stop charging the equipment 202 to be charged.

According to the integrated storage and charging device provided in the embodiments of the present disclosure, when the second test result is normal, the first switch module is controlled to be turned on and the second switch module is controlled to be turned off, so that the energy storage module charges the equipment to be charged through the second voltage conversion module. In this way, the integrated storage and charging device can still supply power to the equipment to be charged when the alternating current grid is in a peak demand for electricity or has a power outage, thereby enriching application scenarios of the integrated storage and charging device.

In some embodiments, continuing to refer to FIG. 2, the control module 106 is further configured to: when the first test result and the second test result are both normal, send the first driving signal in the second level state to the first switch module 104 and send the second driving signal in the second level state to the second switch module 105, to control both the first switch module 104 and the second switch module 105 to be turned off.

The first voltage conversion module 101 is further configured to: receive a second grid voltage output by the alternating current grid 201, and perform voltage conversion on the second grid voltage to obtain a first converted voltage.

The second voltage conversion module 102 is further configured to: perform voltage conversion on the first converted voltage to obtain a third charging voltage, and provide the third charging voltage to equipment 202 to be charged for charging.

In the embodiments of the present disclosure, in the charging and discharging test processes in the aforementioned embodiment, when the first switch module 104 is turned on and the second switch module 105 is turned off, if the first test result is determined to be normal, it determines that the first voltage conversion module 101 and the energy storage module 103 can both operate normally. Based on this, in the charging and discharging test processes in the aforementioned embodiment, when the first switch module 104 is turned off and the second switch module 105 is turned on, if the second test result is determined to be normal, it determines that the second voltage conversion module 102 can also work normally, namely, the first voltage conversion module 101, the second voltage conversion module 102, and the energy storage module 103 are all normal. In this case, when the integrated storage and charging device 10 is actually used, the control module 106 can control the first switch module 104 to be turned off by sending the first driving signal in the second level state to the first switch module 104, and control the second switch module 105 to be turned off too by sending the second driving signal in the second level state to the second switch module 105, so that the alternating current grid 201 charges the equipment 202 to be charged through the first voltage conversion module 101 and the second voltage conversion module 102.

In the embodiments of the present disclosure, specifically, the alternating current grid 201 first sends the second grid voltage to the first voltage conversion module 101. A voltage value of the second grid voltage may be the same as or different from the voltage value of the first grid voltage. After receiving the second grid voltage, the first voltage conversion module 101 can perform AC/DC voltage conversion on the second grid voltage to obtain a first converted voltage. A voltage value of the first converted voltage may be the same as or different from the voltage value of the foregoing first charging voltage.

Further, the first converted voltage is provided for the second voltage conversion module 102 via the direct current bus, and the second voltage conversion module 102 performs DC/DC conversion on the first converted voltage to obtain the third charging voltage. The third charging voltage can be provided for the equipment 202 to be charged to charge the equipment 202 to be charged. The equipment 202 to be charged may be a new energy vehicle or other electrical equipment.

In the embodiments of the present disclosure, in the charging process of the equipment 202 to be charged, the control module 106 can determine, by monitoring the first converted voltage and the third charging voltage, whether the first voltage conversion module 101 and the second voltage conversion module 102 are abnormal, and when a charging abnormality occurs, control the abnormal first voltage conversion module 101 or the abnormal second voltage conversion module 102 to stop working, so that the alternating current grid 201 is unable to continue to charge the equipment 202 to be charged.

According to the integrated storage and charging device provided in the embodiments of the present disclosure, when the first test result and the second test result are both normal, the first switch module and the second switch module are both controlled to be turned off, and the alternating current grid 201 charges the equipment to be charged via the first voltage conversion module and the second voltage conversion module. The equipment to be charged can be charged only when the first voltage conversion module, the energy storage module, and the second voltage conversion module are tested normally, thereby improving the safety and stability of the equipment to be charged in the charging process.

In some embodiments, continuing to refer to FIG. 2, the control module 106 is further configured to: when the first test result and the second test result are both normal, send the first driving signal in the first level state to the first switch module 104 and send the second driving signal in the second level state to the second switch module 105, to control the first switch module 104 to be turned on and the second switch module 105 to be turned off.

The energy storage module 103 is further configured to provide a second battery voltage to the second voltage conversion module 102 through the first switch module 104.

The first voltage conversion module 101 is further configured to: receive a third grid voltage output by the alternating current grid 201, perform voltage conversion on the third grid voltage to obtain a second converted voltage, and provide the second converted voltage to the second voltage conversion module 102.

The second voltage conversion module 102 is configured to: receive the second battery voltage and the second converted voltage, perform voltage conversion on the second battery voltage and the second converted voltage to obtain a fourth charging voltage, and provide the fourth charging voltage to equipment 202 to be charged for charging.

As mentioned above, based on the fact that the first test result is normal and the second test result is also normal, it can determine that the first voltage conversion module 101, the second voltage conversion module 102, and the energy storage module 103 can all operate normally. In this case, when the integrated storage and charging device 10 is actually used, the control module 106 can control the first switch module 104 to be turned on by sending the first driving signal in the first level state to the first switch module 104, and control the second switch module 105 to be turned off by sending the second driving signal in the second level state to the second switch module 105, so that the alternating current grid 201 charges the equipment 202 to be charged through the first voltage conversion module 101 and the second voltage conversion module 102, and at the same time, the energy storage module 103 also charges the equipment 202 to be charged through the second voltage conversion module 102.

In the embodiments of the present disclosure, specifically, the alternating current grid 201 first sends the third grid voltage to the first voltage conversion module 101. A voltage value of the second grid voltage may be the same as or different from the voltage value of the foregoing first grid voltage and the voltage of the foregoing second grid voltage. After receiving the third grid voltage, the first voltage conversion module 101 can perform AC/DC voltage conversion on the third grid voltage to obtain the second converted voltage, and provide the second converted voltage to the second voltage conversion module 102. Meanwhile, the energy storage module 103 sends the second battery voltage to the second voltage conversion module 102 through the turned-on first switch module 104 and the direct current bus.

Further, the second voltage conversion module 102 connects the received second converted voltage to the received second battery voltage in parallel, namely, performs DC/DC voltage conversion on a sum of a voltage value of the second converted voltage and a voltage value of the second battery voltage, to obtain the fourth charging voltage, and provides the fourth charging voltage to the equipment 202 to be charged for charging. In this way, the alternating current grid 201 and the energy storage module 103 can simultaneously supply power to the equipment 202 to be charged. Compared with the method for charging the equipment 202 to be charged only through the alternating current grid 201 or only through the energy storage module 103 in the aforementioned embodiments, the simultaneous charging method in this embodiment of the present disclosure outputs a higher voltage to the equipment 202 to be charged, which can reach 310 kV, so that the charging time is shorter, and a function of fast charging or super charging is achieved.

In the embodiments of the present disclosure, in the charging process of the equipment 202 to be charged, the control module 106 can determine, by monitoring the second battery voltage and the second converted voltage, whether the first voltage conversion module 101, the second voltage conversion module 102, and the energy storage module 103 are abnormal, and when a charging abnormality occurs, control the abnormal first voltage conversion module 101 or the abnormal second voltage conversion module 102 to stop working, or control the abnormal energy storage module 103 to stop outputting the second battery voltage, so as to stop charging the equipment 202 to be charged.

It should be noted that a user can select different charging modes on an interaction interface of the integrated storage and charging device 10, such as charging only through the alternating current grid 201, charging only through the energy storage module 103, or charging through both the alternating current grid 201 and the energy storage module 103. Based on a charging mode selected by the user, the control module 106 can control the on-off state of the first switch module 104 and the on-off state of the second switch module 105, control whether the alternating current grid 201 is connected and whether the energy storage module 103 outputs a battery voltage, and the like, so that the integrated storage and charging device 10 charges the equipment 202 to be charged in the mode set by the user.

According to the integrated storage and charging device provided in the embodiments of the present disclosure, when the first test result and the second test result are both normal, the first switch module is controlled to be turned on and the second switch module is controlled to be turned off, and both the alternating current grid and the energy storage module charge the equipment to be charged. In this way, the charging speed and charging efficiency of the integrated storage and charging device are improved.

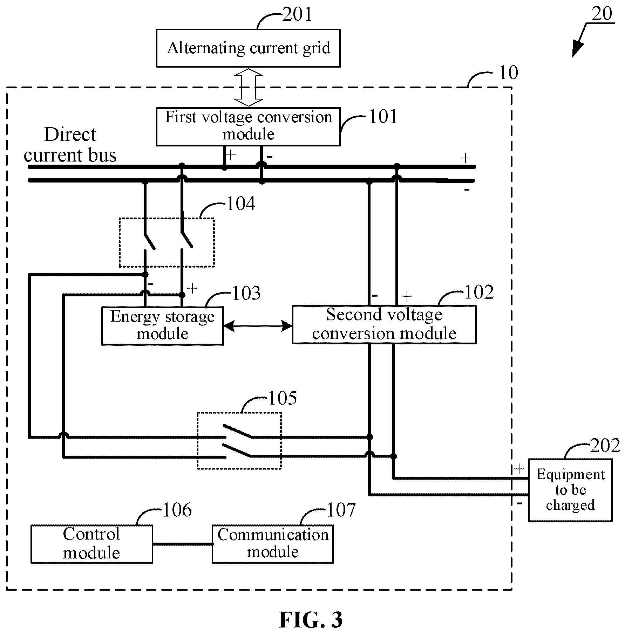

In still another embodiment of the present disclosure, FIG. 3 is a schematic structural diagram III of compositions of a charging system according to an embodiment of the present disclosure. As shown in FIG. 3, the integrated storage and charging device 10 further includes a communication module 107. The communication module 107 is connected to the control module 106.

The communication module 107 is configured to: receive a first control signal and send the first control signal to the control module 106.

The control module 106 is further configured to: generate, according to the first control signal, the first driving signal that is sent to the first switch module 104 and the second driving signal that is sent to the second switch module 105.

In the embodiments of the present disclosure, the communication module 107 may also be referred to as a wireless communication module, which has a communication function and can receive input parameters and output parameters, which are acquired by the control module 106, of the energy storage module 103, the first voltage conversion module 101, and the second voltage conversion module 102, such as current and voltage, and transmit the data to a cloud platform.

In the embodiments of the present disclosure, the communication module 107 can further receive the first control signal from the cloud platform and send the first control signal to the control module 106. The control module 106 can generate, based on the first control signal, the first driving signal for controlling the first switch module 104 to be turned on and turned off, and the second driving signal for controlling the second switch module 105 to be turned on and turned off. The first control signal can be generated based on an operation performed by the user on the interaction interface of the cloud platform. Exemplarily, the user can select a mode for testing different modules, or different modes for charging in different ways, which will correspond to different on-off state of the first switch module 104 and different on-off state of the second switch module 105, thereby adapting to the generation of the first control signal and sending the first control signal to the control module 106 through the communication module 107.

According to the integrated storage and charging device provided in the embodiments of the present disclosure, the control module generates the first driving signal and the second driving signal based on the first control signal sent by the communication module, and controls the on-off state of the first switch module 104 and the on-off state of the second switch module respectively. In this way, the first switch module 104 and the second switch module can be switched to different on/off states in different modes according to control, thereby improving the convenience and safety of control of the integrated storage and charging device.

In some embodiments, continuing to refer to FIG. 3, the control module 106 is further configured to: send a second control signal to the first voltage conversion module 101 and send a third control signal to the second voltage conversion module 102.

The first voltage conversion module 101 is configured to: receive the second control signal and control the voltage conversion of the first voltage conversion module 101 according to the second control signal.

The second voltage conversion module 102 is configured to: receive the third control signal and control the voltage conversion of the second voltage conversion module 102 according to the third control signal.

In the embodiments of the present disclosure, the control module 106 can correspondingly adjust the second control signal based on the monitoring of the output voltage of the first voltage conversion module 101, and output the second control signal when the output voltage of the first voltage conversion module 101 changes, so as to correspondingly adjust a voltage conversion amplitude of the first voltage conversion module 101, to maintain the stability of the output voltage of the first voltage conversion module 101.

In the embodiments of the present disclosure, accordingly, the control module 106 can also generate the third control signal based on a monitoring feedback of the output voltage of the second voltage conversion module 102 to control a voltage conversion amplitude of the second voltage conversion module 102, to maintain the stability of the output voltage of the second voltage conversion module 102.

It should be noted that a controller is arranged in the first voltage conversion module 101 to: receive the second control signal and control an increase degree or a decrease degree of the output voltage of the first voltage conversion module 101 relative to the input voltage based on the second control signal. Correspondingly, a corresponding controller is also arranged in the second voltage conversion module 102, which can control an increase degree or a decrease degree of the output voltage of the second voltage conversion module 102 relative to the input voltage based on the third control signal.

It should be further noted that the control module 106 can also determine voltage conversion amplitudes of the first voltage conversion module 101 and the second voltage conversion module 102 according to a demand for an output voltage, respectively generate the second control signal and the third control signal respectively, and send the second control signal and the third control signal to the first voltage conversion module 101 and the second voltage conversion module 102.

According to the integrated storage and charging device provided in the embodiments of the present disclosure, the control module 106 can send the second control signal to the first voltage conversion module to control the voltage conversion of the first voltage conversion module, and send the third control signal to the second voltage conversion module to control the voltage conversion of the second voltage conversion module. In this way, the voltage conversion of the first voltage conversion module and the voltage conversion of the second voltage conversion module are controlled, thereby improving the accuracy and stability of an output voltage of the integrated storage and charging device.

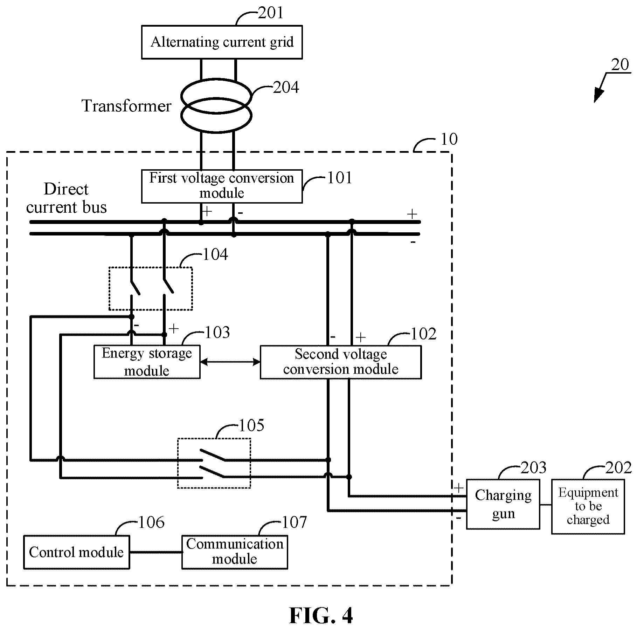

In yet another embodiment of the present disclosure, FIG. 4 is a schematic structural diagram IV of compositions of a charging system according to an embodiment of the present disclosure. As shown in FIG. 4, the charging system 20 includes a charging gun 203, equipment 202 to be charged, and the storage-charging integrated device 10 in the foregoing embodiment. An input end of the charging gun 203 is connected to an output end of the storage-charging integrated device 10, and an output end of the charging gun 203 is connected to the equipment 202 to be charged.

The integrated storage and charging device 10 is configured to: perform voltage conversion on an output voltage of the energy storage module 103 and/or an output voltage of the alternating current grid 201, and provide a charging voltage obtained after the voltage conversion to the equipment 202 to be charged through the charging gun 203 for charging.

In the embodiments of the present disclosure, the input end of the charging gun 203 is connected to the integrated storage and charging device 10, and the output end of the charging gun 203 is connected to the equipment 202 to be charged. The equipment 202 to be charged may be a new energy vehicle. The charging gun 203 may be fixedly connected to the integrated storage and charging device 10 as a part of the integrated storage and charging device 10, or may be connected to the integrated storage and charging device 10 through a port. When the equipment 202 to be charged needs to be charged, a user connects the equipment 202 to be charged to the integrated storage and charging device 10 through the charging gun 203.

It should be noted that the charging gun 203 may have different output voltage levels, and can intelligently and dynamically adjust its output power according to input power of the equipment 202 to be charged. Moreover, the charging gun 203 can provide safety protection for the equipment 202 to be charged, to prevent the storage and charging device 10 from causing damage to the equipment 202 to be charged due to short circuit, overvoltage, overcurrent, and the like.

In the embodiments of the present disclosure and the aforementioned embodiments, a transformer 204 may be arranged between the alternating current grid 201 and the first voltage conversion module 101. The input end of the transformer 204 is the alternating current grid 201, and the output end of a first transformer U1 is connected to the input end of the first voltage conversion module 101.

In the embodiments of the present disclosure, the function of the transformer 204 is to convert a voltage of the alternating current grid 201 into an alternating current voltage desired by the integrated storage and charging device 10. Exemplarily, the voltage of the alternating current grid is 500 kV, 220 kV, 110 kV, 35 kV, 10 kV, 6 kV, 3 kV, and the like, which can be converted into alternating current voltage of 380 V by the transformer 204.

In the embodiments of the present disclosure, the integrated storage and charging device 10 can support high-power fast charging. That is to say, compared with the method for charging only through the alternating current grid 201 in the related art, the embodiments of the present disclosure can provide a higher charging capacity, thereby increasing the charging speed.

It should be noted that when the first voltage conversion module 101 and the energy storage module 103 in the integrated storage and charging device 10 are tested based on the test method in the aforementioned embodiment, when the first switch module 104 is turned on and the second switch module 105 is turned off, a flowing path of electrical energy is: alternating current grid 201↔first voltage conversion module 101↔energy storage module 103. When the second voltage conversion module 102 and the energy storage module 103 in the integrated storage and charging device 10 are tested based on the test method in the aforementioned embodiments, a flowing path of electrical energy is: alternating current grid 201↔first voltage conversion module 101↔second voltage conversion module 102↔energy storage module 103. Through the above method, based on the test method in the aforementioned embodiments, fast charging and discharging between the modules are achieved, and mutual test is achieved.

It should be further noted that the energy storage module 103 and the second voltage conversion module 102 can be communicatively connected to each other for communication. When the first switch module 104 is turned off and the second switch module 105 is turned on, to test the first voltage conversion module 101, the second voltage conversion module 102, and the energy storage module 103, abnormality information or alarm information can be transmitted to the second voltage conversion module 102 based on the communication. After receiving the abnormality information sent by the energy storage module 103, the second voltage conversion module 102 stops working and sends information of stop of working to the energy storage module 103, so as to avoid the abnormality of the energy storage module 103 from causing damage to other modules.

The embodiments of the present disclosure provide a charging system, in which the integrated storage and charging device can control the alternating current grid to charge the equipment to be charged. The integrated storage and charging device can achieve mutual test between the first voltage conversion module, the second voltage conversion module, and the energy storage module, without external charging and discharging equipment, thus completing the test of the integrated machine. The charging gun improves the safety and stability of the integrated storage and charging device in the charging process.

It should be understood that those skilled in the art can know that the present disclosure may adopt the form of a hardware embodiment, a software embodiment, or a software and hardware combination embodiment. In addition, the present disclosure may adopt the form of a computer program product implemented on one or multiple computer-sensitive storage media (including, but not limited to, a magnetic disk memory and an optical memory) including computer-sensitive program codes.

It should be further understood that "one embodiment" or "an embodiment" mentioned throughout this specification means that a specific feature, structure, or characteristic related to the embodiment is included in at least one embodiment of the present disclosure. Thus, "in one embodiment" or "in an embodiment" that appears throughout this specification may not necessarily mean the same embodiment. In addition, these specific features, structures, or characteristics may be combined in one or more embodiments in any suitable manner. It should be understood that in the various embodiments of the present disclosure, the size of the serial numbers of the above steps/processes does not imply the order of execution, and the execution order of each step/process should be determined by its function and internal logic, and should not constitute any limitations on the implementation process of the embodiment of the present disclosure. The sequential numbers of the foregoing embodiments of the present disclosure are merely for description purpose but do not imply the preference of the embodiments.

It should be noted that the terms "include", "comprise", or any other variations thereof in the present disclosure are intended to cover a non-exclusive inclusion, so that a process, method, object, or apparatus including a series of elements not only includes those elements, but also includes other elements not specifically listed, or includes inherent elements of this process, method, object, or apparatus. Without more limitations, elements defined by a statement "including one" do not exclude the existence of other identical elements in the process, method, item or apparatus that includes the said elements.

It should be understood that the disclosed system, equipment, and method in the several embodiments provided in the present disclosure may be implemented in other ways. The above-described device embodiments are merely illustrative. For example, the division of the units is only one type of logical functional division, and other divisions is achieved in practice. For example, multiple units or components can be combined or integrated into another system, or some features can be omitted, or not executed. In addition, the coupling, or direct coupling, or communicative connection between the displayed or discussed components may be indirect coupling or communicative connection between devices or units, or may be electrical, mechanical, or in other forms.

The units described as separate components may or may not be physically separated, and the components displayed as units may or may not be physical units, and may be located in one place or may be distributed over a plurality of network units. The objectives of the solution of this embodiment can be achieved by selecting some or all of the units according to an actual need. In addition, the functional units in the embodiments of the present disclosure may be all integrated into one processing unit, or each of the units may serve as one unit, or two or more units may be integrated into one unit. The integrated unit described above may be implemented in the form of hardware or a software and hardware functional unit.

The above only describes the preferred embodiments of the present disclosure and is not intended to limit the present disclosure. Any modification, equivalent replacement, and improvement made within the spirit and principle of the present disclosure shall fall within the protection scope of the present disclosure.

## Claims

1. An integrated storage and charging device, wherein the integrated storage and charging device comprises a first voltage conversion module, a second voltage conversion module, an energy storage module, a first switch module, and a second switch module, wherein
an input end of the first voltage conversion module is connected to an alternating current grid; an output end of the first voltage conversion module is connected to a first end of the first switch module; a second end of the first switch module is connected to the energy storage module;
the output end of the first voltage conversion module is further connected to an input end of the second voltage conversion module; an output end of the second voltage conversion module is connected to a first end of the second switch module; a second end of the second switch module is connected to the energy storage module; and
the integrated storage and charging device is configured to: control an on-off state of the first switch module and an on-off state of the second switch module and perform charging and discharging tests among the first voltage conversion module, the second voltage conversion module, and the energy storage module.

2. The integrated storage and charging device according to claim 1, wherein the integrated storage and charging device further comprises a control module, wherein
the control module is configured to: send a first driving signal to the first switch module and send a second driving signal to the second switch module;
the first switch module is configured to: receive the first driving signal and control the on-off state of the first switch module based on the first driving signal; and
the second switch module is configured to: receive the second driving signal and control the on-off state of the second switch module based on the second driving signal.

3. The integrated storage and charging device according to claim 2, wherein
the integrated storage and charging device is configured to: control, when the first driving signal is in a first level state and the second driving signal is in a second level state, the first switch module to switch on and the second switch module to switch off, and perform, based on the alternating current grid, charging and discharging tests between the first voltage conversion module and the energy storage module to determine a first test result.

4. The integrated storage and charging device according to claim 2, wherein
the integrated storage and charging device is configured to: control, when the first driving signal is in the second level state and the second driving signal is in the first level state, the first switch module to switch off and the second switch module to switch on, and perform, based on the alternating current grid, charging and discharging tests among the first voltage conversion module, the second voltage conversion module, and the energy storage module to determine a second test result.

5. The integrated storage and charging device according to claim 3, wherein
the control module is further configured to: when the first test result is normal, send the first driving signal in the first level state to the first switch module and send the second driving signal in the second level state to the second switch module, to control the first switch module to switch on and the second switch module to switch off;
the first voltage conversion module is further configured to: receive a first grid voltage output by the alternating current grid, perform voltage conversion on the first grid voltage to obtain a first charging voltage, and provide the first charging voltage to the energy storage module for charging.

6. The integrated storage and charging device according to claim 4, wherein
the control module is further configured to: when the second test result is normal, send the first driving signal in the first level state to the first switch module and send the second driving signal in the second level state to the second switch module, to control the first switch module to switch on and the second switch module to switch off;
the energy storage module is further configured to provide a first battery voltage to the second voltage conversion module through the first switch module; and
the second voltage conversion module is configured to: perform voltage conversion on the first battery voltage to obtain a second charging voltage, and provide the second charging voltage to equipment to be charged for charging.

7. The integrated storage and charging device according to claim 3 or 4, wherein
the control module is further configured to: when the first test result and the second test result are both normal, send the first driving signal in the second level state to the first switch module and send the second driving signal in the second level state to the second switch module, to control both the first switch module and the second switch module to switch off;
the first voltage conversion module is further configured to: receive a second grid voltage output by the alternating current grid, and perform voltage conversion on the second grid voltage to obtain a first converted voltage; and
the second voltage conversion module is further configured to: perform voltage conversion on the first converted voltage to obtain a third charging voltage, and provide the third charging voltage to equipment to be charged for charging.

8. The integrated storage and charging device according to claim 3 or 4, wherein
the control module is further configured to: when the first test result and the second test result are both normal, send the first driving signal in the first level state to the first switch module and send the second driving signal in the second level state to the second switch module, to control the first switch module to switch on and the second switch module to switch off;
the energy storage module is further configured to provide a second battery voltage to the second voltage conversion module through the first switch module;
the first voltage conversion module is further configured to: receive a third grid voltage output by the alternating current grid, perform voltage conversion on the third grid voltage to obtain a second converted voltage, and provide the second converted voltage to the second voltage conversion module; and
the second voltage conversion module is further configured to: receive the second battery voltage and the second converted voltage, perform voltage conversion on the second battery voltage and the second converted voltage to obtain a fourth charging voltage, and provide the fourth charging voltage to equipment to be charged for charging.

9. The integrated storage and charging device according to any one of claims 2 to 8, wherein the integrated storage and charging device further comprises a communication module, the communication module is connected to the control module; wherein
the communication module is configured to: receive a first control signal and send the first control signal to the control module; and
the control module is further configured to: generate, according to the first control signal, the first driving signal that is sent to the first switch module and the second driving signal that is sent to the second switch module.

10. The integrated storage and charging device according to any one of claims 2 to 9, wherein
the control module is further configured to: send a second control signal to the first voltage conversion module and send a third control signal to the second voltage conversion module;
the first voltage conversion module is configured to: receive the second control signal and control the voltage conversion of the first voltage conversion module according to the second control signal; and
the second voltage conversion module is configured to: receive the third control signal and control the voltage conversion of the second voltage conversion module according to the third control signal.

11. The integrated storage and charging device according to any one of claims 2 to 10, wherein
the input end of the first voltage conversion module is connected to an output end of a transformer, and an input end of the transformer is connected to the alternating current grid.

12. A charging system, comprising a charging gun, equipment to be charged, and the integrated storage and charging device according to any one of claims 1 to 11, wherein an input end of the charging gun is connected to an output end of the integrated storage and charging device, and an output end of the charging gun is connected to the equipment to be charged; wherein
the integrated storage and charging device is configured to: perform voltage conversion on an output voltage of the energy storage module and/or an output voltage of the alternating current grid, and provide a charging voltage obtained from the voltage conversion to the equipment to be charged through the charging gun for charging.
